# EUROPEAN PATENT APPLICATION

(11) **EP 4 523 651 A1**
(43) Date of publication of application: **19.03.2025**
(21) Application number: 24200164.2
(22) Date of filing: 13.09.2024
(51) Int. Cl.: A61C 8/00

(54) **MEDICAL DEVICE, MEDICAL KIT AND KIT FOR ORTHODONTIC TREATMENTS**

(30) Priority: 14.09.2023 IT 202300018876
(71) Applicant: H.D.C. S.r.l., 36016 Thiene (VI) (IT)
(72) Inventor: PIZZOLOTTO, David, 36016 THIENE (VI) (IT); BENVEGNU', Marco, 36016 THIENE (VI) (IT); MAINO, Giovanna, 36016 THIENE (VI) (IT); BORTOLO MAINO, Giuliano, 36016 THIENE (VI) (IT)
(74) Representative: De Filippis, Sara

(57) **Abstract**

Medical device, in particular a fixing device (1) in particular for association with a palatal arch bone and/or an orthodontic appliance, characterised by comprising:
- a first portion (2) configured to be inserted, at least partially, inside the patient's bone and which develops longitudinally along a Z-axis
- a second portion (10) configured to remain external to said bone,
- a third portion (22) configured to remain external to said bone, and intended to be associated with said orthodontic appliance, and characterised by the fact that it develops longitudinally along a Z' axis which is angled with respect to said Z axis.

## Description

The present invention relates to a medical device, in particular a medical device for dentistry, and more specifically an angled orthodontic screw. The present invention also relates to a medical kit comprising said medical device and an insertion device. The present invention also relates to a kit for orthodontic treatments comprising said association medical device and an orthodontic device, for example for widening the palatal arch of a patient, or for distalizing and mesializing teeth, or in any case for moving the upper arch.

In orthodontics, it is well known that it is necessary to widen a patient's palate, for example in order to increase the size of the palatal arch to allow for correct development of the teeth, or in order to allow for the alignment of the teeth and/or to coordinate the transverse dimension of the two arches, thus improving swallowing and chewing, and sometimes even breathing and phonation.

It is a well-known practice, in the case of patients with a narrow palate, to apply to the palate a device that allows its dimensions, called curvatures, to be expanded said device, called a Rapid Palatal Expander device (*Rapid Palatal Expander,* RPE, or *Maxillary Rapid Expander,* MRE) consisting of a central expansion screw connected to the teeth by means of metal arms welded to bands which in turn are cemented to the teeth. The opening of the expansion screw connected to the teeth allows for a skeletal expansion of the palate, that is, an expansion of the bone structures through the opening of the median suture of the palate which connects the two palatine bones that form the palatal vault.

However, when growth is almost completed or even totally completed, the anatomy of the median palatine suture becomes very complicated and sometimes it can even be fused, preventing the separation of the two palatine bones.

Therefore, in good orthodontic practice, when it is necessary to expand the palate in a patient who is approaching the end of growth or who has completed growth, it is recommended to combine the expander with a surgical procedure that effectively separates the two palatine bones. This procedure is called SARPE (*Surgically Assisted Rapid Palatal Expansion*) or SARME (*Surgically Assisted Rapid Maxillary Expansion).*

In recent years, with the introduction of mini-screw-shaped skeletal anchors anchored to the palate, it has been seen that many cases of patients at the end of growth or adults who require a skeletal expansion of the palate can be successfully resolved by applying mini-screws of various lengths to the palate and connecting them directly to the expander which in turn can be connected to the teeth always using arms welded to bands cemented to the teeth thus giving rise to a skeletal and dentally supported expander (Hybrid RPE) or by connecting a plurality of mini-screws directly to the expander without touching the teeth (Bone Borne RPE). The effectiveness of the expander is linked to the stability and direction of insertion of the palatal mini-screws which in turn are more stable if positioned in areas where the quantity of bone is more abundant.

The known screws are not, however, fully satisfactory because, in order to fully exploit the areas of maximum bone availability and to direct the expansion forces so as to be as efficient as possible in opening the palatal vault, they are often inserted with a convergent inclination towards the central area of the palate, which subsequently makes the construction and application of the palatal expander complex due to the lack of parallelism between the different components. Given these difficulties, their digitally guided programming and subsequent insertion must find a compromise between the efficiency of the expander, which would require exploiting the areas with greater bone availability, and the feasibility of building and inserting the expander, which must be connected to a plurality of palatal screws and sometimes even to the teeth.

US 2002/0127510 shows a screw intended to be inserted into the bone of a patient in order to transmit, by means of an elastic element, a force to a tooth to which an orthodontic appliance is connected.

The purpose of the present invention is to propose a medical device and a kit that overcome the drawbacks of known solutions.

Another purpose of the present invention is to propose a medical device that is removable.

Another purpose of the present invention is to propose a medical device that can be associated with an orthodontic appliance.

Another aim of the present invention is to propose a medical device that is easy and quick to install.

Another aim of the present invention is to propose a medical device that can be installed by personnel without long experience and not specifically trained. Another aim of the present invention is to propose a kit that can be used by non-specifically trained personnel.

Another purpose of the present invention is to propose a kit that can be used with tools commonly used in the dental field.

Another purpose of the present invention is to propose a medical device that is durable.

Another purpose of the present invention is to propose a medical device and a kit that are simple and rapid to produce.

Another aim of the present invention is to propose a medical device that is an alternative and/or improvement on known solutions.

Another purpose of the present invention is to propose a medical device that can be easily coupled to an insertion device.

Another purpose of the present invention is to propose a medical device that can be associated with a crown.

Another aim of the present invention is to propose a medical device and a kit that can be directly associated with an external tool, for example a common dentist's drill.

Another object of the present invention is to propose a medical device that can be firmly associated with a bone, and in particular that can be inserted into the bone. Another aim of the present invention is to propose a medical device that allows the position and/or depth of insertion to be found quickly.

Another aim of the present invention is to propose a medical device that can be custom-made based on the morphology of the patient's palatal vault.

Another aim of the invention is to propose a kit for widening the palatal arch.

All these purposes, and others that will clearly result from the description, are obtained by means of a medical device having the characteristics described in claim 1, with a medical kit having the characteristics described in claim 5 and with a kit for orthodontic treatments having the characteristics described in claim 10.

Other structural and functional features of the present invention and the related advantages with respect to the known art will become even clearer and more evident from an examination of the following description, referring to an exemplary and preferred, but not limiting, embodiment of the medical device and kit, object of the present invention, and from the attached drawings, where:

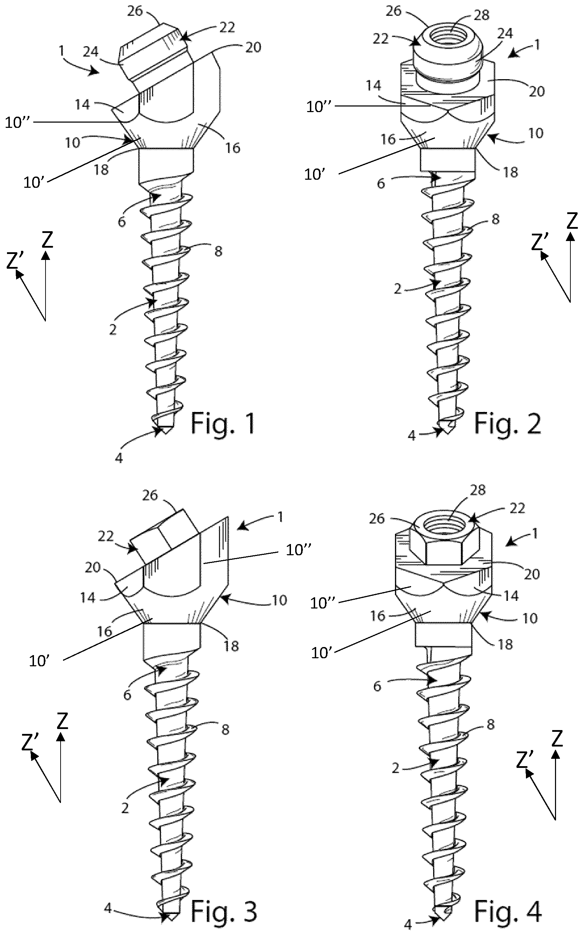

Figure 1 shows a lateral perspective view of a medical device according to the invention in a first embodiment,
Figure 2 shows it in front perspective view in the first embodiment,
Figure 3 shows a lateral perspective view of a medical device according to the invention in a second embodiment,
Figure 4 shows it in front perspective view in the second embodiment,
Figure 5 shows a lateral perspective view of a medical device according to the invention in a third embodiment,
Figure 6 shows it in front perspective view in the third embodiment,
Figure 7 shows it in a side perspective view in a further embodiment,

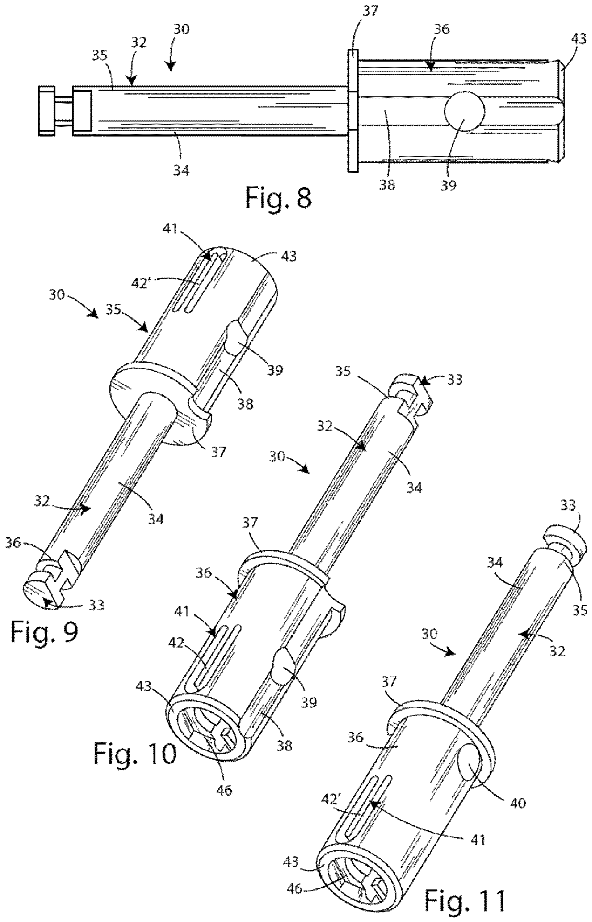

Figure 8 shows a side view of the insertion device,
Figure 9 shows it in perspective view from below,
Figure 10 shows it in perspective view from above,
Figure 11 shows it in rear perspective view,
Figure 12 shows it in side view in a further embodiment,
Figure 13 shows a side perspective view of the insertion device with the accessory mounted,
Figure 14 shows a lateral perspective view of an accessory and
Figure 15 shows a front view of a palatal arch widening kit according to the invention.

As can be clearly seen from the figures, the present invention relates to a medical device, generally indicated by the number 1, which is configured to be inserted inside the bone of a patient, preferably inside the palate, or alternatively can be associated with a crown.

In particular, the fixing device 1 can be configured to be inserted stably inside said bone, i.e. in such a way as not to risk being accidentally removed from the bone itself.

Suitably, the fixing device 1 can be configured to pierce the mucosa that possibly covers the bone to which the device is to be associated.

Advantageously, the fixing device 1 can be substantially removable, i.e. it can be configured so as not to be integrated by the bone in which it is inserted. For this purpose, it may not be burnished and/or in any case it can be superficially treated so as not to encourage the growth of bone around the device itself. In general, however, the fixing device 1 can be made of biocompatible material, so as not to create phenomena of irritation or unwanted biological reaction.

In particular, the fixing device 1 can be configured to be directly associated with an orthodontic device, for example for widening the palatal arch of a patient, or to distalize and mesialize the teeth, or in any case to move the upper arch. In particular, this means that the fixing device 1 is configured to be inserted into a hole 49 defined on said orthodontic device 44. Suitably, the fixing device 1 can be configured to be associated with and consequently fix an orthodontic device 44, through the hole 49. Advantageously, therefore, the orthodontic device 44 can be configured to be fixed to the palatal vault of a patient by means of at least one fixing device 1.

In a preferred embodiment, the fixing device 1 may comprise a first portion 2 configured to be inserted, at least partially, or totally inside the bone. Suitably, the first portion 2 may be substantially elongated along a Z axis. Suitably, the first portion 2 may have a substantially conical shape, or, alternatively, it may be cylindrical, or a combination of the two. In particular, it may therefore have a first distal end 4 which has a section substantially smaller than the diameter of the proximal end 6, i.e. the first portion 2 has a substantially tapered shape.

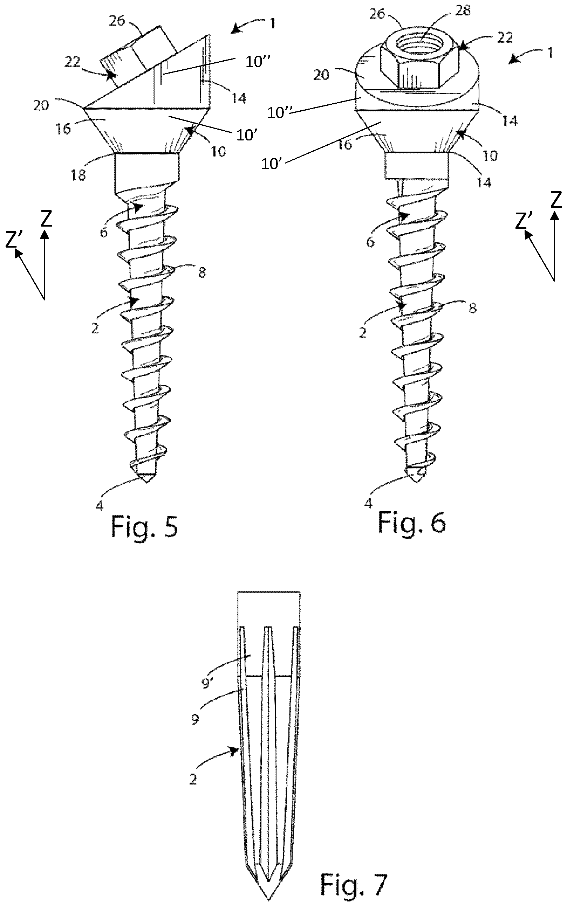

Suitably, said first portion 2 can be configured to be screwed into the bone, i.e. it can have a thread 8. More preferably, said first portion 2 can be self-threading, in particular it can have a sharp distal end 4. In an embodiment shown in figs. 6, 7, the first portion 2 may not have a thread 8 but different insertion means, such as for example grooves 9 alternating with retention reliefs 9' which both develop in a longitudinal direction, so that it can be inserted without rotation.

Conveniently, the first portion 2 can have a different diameter based on the shape of the patient's palatal arch in which it is to be installed.

Furthermore, the fixing device 1 may also comprise a second portion 10 configured to be positioned, when the device is inserted inside the patient's bone, in a position substantially external to the bone itself, and preferably in correspondence with the mucosa covering the bone. Conveniently, said second portion 10 may be rigidly associated with said proximal end 6 of the first portion 2. In particular, therefore, the second portion 10 may comprise two semi-portions, a first preferably conical semi-portion 10' and a second substantially polygonal semi-portion 10", regular or irregular, or cylindrical. Advantageously, the first semi-portion 10' may therefore have an end of smaller section which is positioned closer to the first portion 2, and an end of larger section which is positioned further away from the first portion 2. Conveniently, the second semi-portion 10" may have a perimeter dimension substantially corresponding to the larger one of the first semi-portion 10'.

In particular, therefore, the second portion 10' can be rotated by means of an external tool, for example by means of a screwdriver or an Allen key, or other, so as to also rotate the first portion 2 in a joint manner.

Advantageously, the second portion 10' can have a substantially longitudinal development, preferably parallel to the Z axis along which the first portion 2 develops.

Preferably, the second portion 10 may comprise a first sub-portion 14 which has a substantially prism shape, which may be regular or irregular, and in particular may be in the shape of a prism with a hexagonal base, or cylindrical. Preferably, the second portion 10 may also comprise a second sub-portion 16 connecting with the first portion 2 which may have a substantially pyramidal shape, in particular pyramidal with a number of sides corresponding to the number of sides of the prism, or conical, in particular in the case in which the first sub-portion 14 has a cylindrical shape. Advantageously, in the case in which the second portion 10 has a prism shape, the edges may be substantially rounded.

Suitably a first base 18 of the second portion 10 which is positioned in correspondence with the first portion 2, i.e. the base 18 of the first sub-portion 14 which is positioned in correspondence with, and preferably in contact with, the first portion 2, can be positioned in an XY plane substantially perpendicular to the Z axis defined by the first portion 2. Suitably the second base 20 of the second portion 10 which is positioned substantially opposite to the first base 18, and/or further away from the first portion 2, can be substantially inclined with respect to the XY plane. In particular it can be inclined by an angle greater than 6°, and more preferably equal to approximately 12°, or equal to approximately 20° or equal to approximately 24°, or equal to approximately 30° or equal to approximately 36°. Substantially therefore the second base 20 of the second portion 10 can be obtained by the intersection of a plane inclined by an angle greater than 6°, and more preferably equal to approximately 12°, or equal to approximately 20° or equal to approximately 24°, or equal to approximately 30° or equal to approximately 36° with the solid substantially defined by the second portion itself. Therefore, a second longitudinal axis Z' substantially perpendicular to the second base 20 can be conveniently defined, which is therefore inclined by an angle greater than 6°, and more preferably equal to approximately 12°, or equal to approximately 20° or equal to approximately 24°, or equal to approximately 30° or equal to approximately 36° with respect to the Z axis.

Advantageously, in correspondence with one of the parts of the second portion 10 which have a greater development along the Z axis, i.e. on one of the most extensive faces of the lateral surface of the prism or in any case in correspondence with the most extensive portion of the cylinder, there may be a positioning element (not shown) which allows the reciprocal positioning of the fixing device 1 and the insertion device 30.

Furthermore, the fastening device 1 according to the invention also comprises a third portion 22, associated with the second portion 10, and preferably with the second base 20. Advantageously, the third portion 22 can be configured to be associated with an external device, such as an orthodontic appliance 44.

Suitably, the third portion 22 may have a substantially cylindrical or prism-shaped development, preferably a prism with a hexagonal base. In a preferred embodiment, the third portion may have a further enlarged sub-portion 24, which has a wider section than the rest of the third portion 22, so as to allow anchoring of the external device intended to be associated with the fastening device 1.

Conveniently, the upper base 26 of the third portion 22, i.e. the one opposite the upper base 20 of the second portion 10, can be substantially flared, so as to allow easy insertion of the external device intended to be associated with the fastening device 1.

Advantageously, the third portion 22 can develop longitudinally along the Z' axis.

Advantageously, the third portion 22, and in particular the upper base 26, can have a cavity 28 suitable for containing means of association with the external device. Preferably, the cavity 28 can be threaded, and said means of association can comprise a screw. In one embodiment, the axis of the cavity 28 can be substantially parallel to the Z' axis defined by the first portion 2.

The present invention further relates to an insertion device 30 configured to allow said fixation device 1 to be inserted into the bone into which it is intended to be inserted.

Suitably, the insertion device 30 can have a substantially longitudinal development, preferably substantially parallel to the Z-axis. In particular, in the condition of use, i.e. when coupled to the fastening device 1, both devices can develop substantially along the same axis, i.e. the Z-axis.

Suitably, the insertion device includes a corresponding first proximal portion 32 configured to be closer to an external tool that may be used to insert the fastener 1 and/or further from the bone into which the fastener is intended to be inserted.

Advantageously, the first proximal portion 32 may comprise a rod 34 to the proximal end 35 of which are fixed appropriate corresponding association means 33 configured to allow said insertion device to be associated with an external tool (not shown), such as for example a common dentist's drill. In particular, said corresponding association means 33 may comprise appropriate shaped portions, for example in order to allow a bayonet connection of the rod 34 of the insertion device 30 in the drill.

Furthermore, the insertion device 30 may conveniently comprise a corresponding second portion 36 configured to allow its association with the fastening device 1. Conveniently, the corresponding second portion 36 may have a substantially cylindrical or prism-like external shape. Advantageously, the length of the corresponding second portion 36 may be selected based on the insertion depth of the fastening device 1 since this is configured to abut a bushing of the orthodontic appliance to be installed or the guide cylinder of the insertion template which may be custom-designed for the patient, and therefore must be positioned with absolute precision. In particular, for this purpose, the second portion 36 comprises an enlarged ring 37 which is configured to abut a suitable guide cylinder.

Suitably on the external wall the insertion device 30 may include a first visual reference 38, configured to allow the user to align the fastening device 1 with the insertion device 30.

For example, said first visual reference 38 may comprise an alignment groove, as will be clear later. Suitably, the alignment groove may also extend through the enlarged ring 37.

Furthermore, a second visual reference 39 may be present, also configured to allow a user to have a visual reference relating to the relative position of the fastening device 1 and the insertion device 30. Advantageously, said second visual reference 39 may be positioned in correspondence with, and preferably within, the alignment groove 38. Suitably, said first visual reference may be a protrusion, a depression or a laser marking.

Advantageously, a suitable third visual reference 40 may be present on the external surface of the corresponding second portion 36 of the insertion device 30.

In a preferred embodiment said first 38, said second 39 and said third 40 visual references may be positioned in diametrically opposite positions of the second portion 36.

This is essential because, during the insertion of the fastening device 1 by means of the insertion device 30, the user is not able to see the orientation of the second base 20 of the fastening device 1, and therefore must rely on said first 38, said second 39 or said third 40 visual reference.

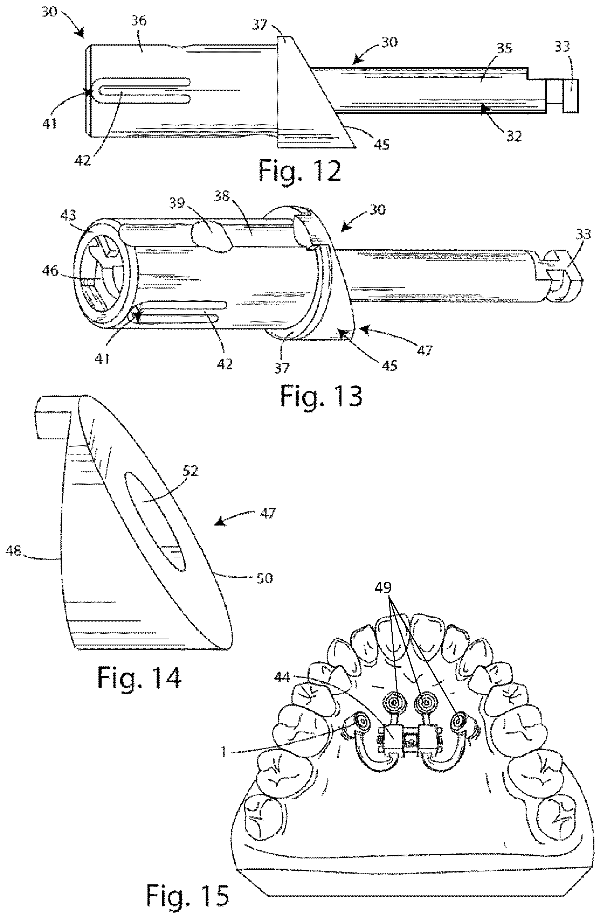

In an embodiment illustrated in fig. 12, furthermore, the lower base 45 of the insertion device 30 - i.e. the one that defines the end of the enlarged ring 37 in the direction in which the insertion device is intended to be engaged in the dental handpiece, or in any case the proximal end - can be shaped in such a way as to substantially replicate the inclination of the upper base 26 of the fastening device 1. Advantageously, therefore, the lower base 45 of the insertion device can be inclined with respect to a plane perpendicular to the Z axis by an angle substantially corresponding to that defined between the Z axis and the Z' axis. In particular, therefore, the lower base 45 of the insertion device 30 can be substantially perpendicular to the Z' axis and/or parallel to the upper base 26 of the fastening device 1. In this way, the user can have at any time a visual reference relating to the orientation of the upper base 26 of the fastening device 1, and therefore of the Z' axis.

In a further embodiment illustrated in figures 13, 14, the insertion device 30 can be associated with a special accessory 47, configured to give the proximal end of the second portion 36 of the insertion device 30 an appearance substantially corresponding to the upper base surface 26 of the fastening device 1. In particular, the accessory 47 can provide a distal base 48, and a proximal base 50 which is angled with respect to the distal base 48 by an angle which substantially corresponds to the angle formed by the Z' axis with the Z axis. Advantageously, when the accessory 47 is in the mounted condition on the insertion device 30, the distal base 48 can be substantially perpendicular to the Z axis, while the proximal base 50 can be substantially perpendicular to the Z' axis. Advantageously, the distal base 48 can be configured to abut on the lower surface of the enlarged ring 37.

Furthermore, said accessory 47 may comprise a through hole 52, the axis of which may be substantially perpendicular to the distal base 48, and that is, it may be substantially parallel to the Z axis. Suitably, the through hole 52 may have a diameter substantially corresponding to the section of the rod 34.

Furthermore, the accessory 47 may comprise an appendix 54 protruding from the distal base 48, which may be configured to fit in shape with said enlarged ring 37 and with said first visual reference 38, in particular with said groove, in order to prevent the reciprocal rotation of the insertion device 30 and the accessory 47.

Furthermore, on the external surface of the corresponding second portion 36, suitable retention means 41 may be present, which for example may comprise at least one, and preferably a pair of through openings 42, 42' configured to allow a stable and reversible coupling of the fastening device 1 with the insertion device 30. Furthermore, always for the same purpose, further retention means 41 may be included, such as retention systems obtained inside the portion 36 such as, for example but not limited to, a groove that allows the insertion of an O-RING made of retentive plastic material.

Advantageously, at the distal end 43 of the insertion device 30 there may be a corresponding opening 46 configured to allow entry of the fastening device 1, and in particular of the third portion 22 and the second portion 10 of the fastening device.

Suitably, the internal surface of the corresponding second portion 36 of the insertion device can be suitably shaped so as to adapt to the shape of the second portion 10 of the fastening device 1. In particular, the internal surface of the corresponding second portion 36 can define a prism or cylindrical shape, and preferably a prism with a hexagonal base.

As is clear from what has been said, the device and the kit according to the invention are particularly advantageous, indeed, optimal, as they allow a simple and rapid installation of a support for an orthodontic appliance, requiring only tools commonly used by dentists, and without requiring specific training.

Advantageously, as shown in the figures, the invention also relates to a kit for widening the palatal arch of a patient. Suitably, said kit may comprise an orthodontic device 44 configured for example to widen the palatal arch or to distalize and mesialize the teeth, or in any case to move the upper arch, and configured to be associated with at least one, and preferably at least two, and more preferably four, or, in an embodiment not illustrated, also five or six fixing devices 1 as described above. More specifically, the orthodontic device 44 may be configured to be associated, by means of at least one, and preferably at least two, and more preferably four or, in an embodiment not illustrated, also five or six fixing devices 1 to the palatal arch of the patient. In particular, the orthodontic device 44 according to the invention may comprise at least one through hole 49 configured to - i.e. having a diameter sized so as to - allow the passage, preferably complete, of the first portion 2 of the fixing device 1, and the passage, preferably only partial, of the second portion 10, and in particular to prevent the passage of the second semi-portion 10" of the second portion 10. In this way, the fixing device 1 can lock the orthodontic device in position. It is clear that in order to achieve this result, the orthodontic device 44 must be associated directly with the fixing device 1, i.e. without the aid of filaments or other elements. Conveniently, the orthodontic device 44 may be connected to the fixing device 1 so that the transmission of the forces exerted by the fixing device 1 on the bone and towards the orthodontic device itself occurs without mediation or reduction.

The use of the kit according to the invention is clear from what has been said above. In particular, following a design, preferably digital, of the positioning and/or sizing of the fixing devices 1, these can be inserted inside the palatine vault of a patient by means of the insertion device 30. In particular, the opening 46 of the insertion device can be inserted into the second portion 10, in order to allow the insertion of the fixing device into the palatine arch. For example, this can occur by screwing, or by pushing. A template may be conveniently created in order to indicate more precisely the position, orientation and insertion depth of each fixing device 1. Subsequently, the insertion device 30 may be removed, and the orthodontic device 44 may be inserted, so that the through holes 49 allow the passage of the third portion 22, and abut the second base 20. Subsequently, the association means (not shown) may be coupled with the third portion, in particular with the cavity 28 in such a way as to stably and reversibly associate the orthodontic device with the fixing device.

Finally, it is evident that numerous other variations can be made to the fastening and joining system in question, without departing from the principles of novelty inherent in the inventive idea as claimed in the attached claims, just as it is clear that, in the practical implementation of the invention, the materials, shapes and dimensions of the illustrated details may be any according to the needs and the same may be replaced with other technically equivalent ones.

In particular, compared to the system described in US 2002/0127510, the screw according to the invention has an angled head in order to create those situations of parallelism that allow the application of a customized device that generally uses two or more screws simultaneously.

## Claims

1. Medical device, in particular a fixing device (1) in particular for fixing an orthodontic appliance (44) to a palatal arch bone, **characterised by** comprising:
- a first portion (2) configured to be inserted, at least partially, inside the patient's bone and which develops longitudinally along a Z-axis,
- a second portion (10) configured to remain external to said bone,
- a third portion (22) configured to remain external to said bone, and intended to be associated with said orthodontic appliance, and **characterised by** the fact that it develops longitudinally along a Z' axis which is angled with respect to said Z axis.

2. Device according to claim 1 **characterised in that** said first portion (2) comprises a self-tapping screw.

3. Device according to one or more of the preceding claims **characterised in that** said second portion (10) comprises a first sub-portion (14) which has a prism shape, preferably with a hexagonal base, or said third portion (22) has a prismatic shape.

4. Device according to one or more of the preceding claims **characterised in that** said Z' axis is inclined with respect to said Z axis by an angle greater than 6°, and more preferably equal to approximately 12°, or equal to approximately 20° or equal to approximately 24°, or equal to approximately 30° or equal to approximately 36°.

5. Device according to one or more of the preceding claims **characterised in that** said second portion (10) comprises:
- a first semi-portion preferably conical (10'),
- a second semi-portion substantially parallelepipedic (10"), regular or irregular or cylindrical.

6. Device according to one or more of the preceding claims **characterised in that** said second portion (10) comprises:
- a first base (18) positioned substantially in contact with said first portion (2), and substantially perpendicular to the Z axis, and
- a second base (20) substantially opposite to said first base (18), and substantially perpendicular to the Z' axis.

7. Device according to one or more of the preceding claims **characterised in that** said third portion (22) has a substantially cylindrical or prism-shaped development, preferably a prism with a hexagonal base and also has a further enlarged sub-portion (24), which has a wider section than the rest of the third portion (22).

8. Medical kit, in particular for fixing a device to a patient's bone, in particular to a palatal arch bone or to an alveolar process **characterised by** comprising:
- a fastening device (1) according to one or more of the preceding claims,
- an insertion device (30) configured to be associated with a tool, in particular a dental handpiece, and said fastening device (1),
and **characterized in that** under working conditions said insertion device develops longitudinally along the Z axis.

9. Kit according to claim 5 **characterised in that** said insertion device (30) comprises:
- a corresponding first portion (32) configured to be inserted and fixed inside said tool,
- a corresponding second portion (36) configured to accommodate said second (10) and said third (22) portion of said fastening device (1).

10. Kit according to one or more of claims 8, 9 **characterised in that** said insertion device (30) comprises a visual reference (38, 39, 40) which is associated with the relative position of said fixing device (1) and said insertion device (30).

11. Kit according to one or more of claims 8-10 **characterised in that** said second portion (36) has a length proportional to the desired insertion depth for said fastening device (1) given by the enlarged ring (37).

12. Kit according to one or more of claims 8-11 **characterised in that**:
- said insertion device (30) comprises a lower base (47) substantially perpendicular to the Z' axis, or
- said kit comprises an accessory (47) configured to be associated with said insertion device (30) and integral in rotation with the latter, said accessory comprising a distal base (48) substantially perpendicular to said Z-axis and configured to abut on said enlarged ring (37) and a proximal base (50) substantially perpendicular to said Z'-axis.

13. Kit for orthodontic treatments, and in particular for palatal widening, **characterized by** the fact that it includes:
- at least one association device (1) according to one or more of claims 1-7,
- at least one orthodontic device (44) configured to allow widening of the palatal cavity and to be associated with said association device (1), and in particular with said third portion (22).

14. Kit according to the previous claim **characterised in that** said orthodontic device (44) comprises at least one through hole (49) configured to house, at least partially, said fixing device (1).

15. Kit according to one or more of claims 13-14 **characterised in that** said at least one through hole (49) is configured to allow said orthodontic device (44) to be inserted onto said fixing device (1), and to abut on said second base (20).
